# EUROPEAN PATENT APPLICATION

(11) **EP 4 436 232 A2**
(43) Date of publication of application: **25.09.2024**
(21) Application number: 24192721.9
(22) Date of filing: 30.09.2022
(51) Int. Cl.: H04W 12/08

(54) **AN ELECTRIC VEHICLE CHARGER ADAPTER AND METHOD FOR CHARGING AN ELECTRIC VEHICLE**

(30) Priority: 19.07.2022 US 202217868348; 30.08.2022 GB 202212570; 30.08.2022 EP 22193025
(62) Divisional of application: 22199288.6
(71) Applicant: Kemal, Andrew, Uckfield TN22 5TJ (GB); Sherman, Gregory, Longmont, CO 80503 (US)
(72) Inventor: Kemal, Andrew, Uckfield TN22 5TJ (GB); Sherman, Gregory, Longmont, CO 80503 (US)
(74) Representative: Mathys & Squire

(57) **Abstract**

An electric vehicle charger adapter is disclosed, comprising an incoming power connection point configured to be electrically coupled to an EV charger, an outgoing power connection point configured to be electrically coupled to an EV and a switch, coupled between the incoming power connection point and the outgoing power connection point; and a processor, coupled to the switch. The processor comprises a wireless communication interface and is configured to transition the switch between an open configuration and a closed configuration based on signals received by the wireless communication interface from a remote device. A method for charging an EV, for example using the electric vehicle charger adapter, is also disclosed.

## Description

### Field of the invention

The present disclosure relates to an electric vehicle, EV, charger adapter and method for charging an EV, in particular an adapter which is configured to be retrofitted onto existing EV chargers, and a method for use.

### Background

The adoption and use of electric vehicles, EVs, has seen a rapid increase in recent years. As a result, there is also an increasing need to charge EVs.

Many owners of EVs have private electric vehicle chargers or charging points to enable them to charge their vehicles at home during periods of non-use. These private charging points are often located on or nearby driveways, designated parking spaces, or garages.

For charging whilst away from home, public EV charging points are also available. These are often located at shopping centres, leisure facilities, public car parks, and service stations. However, implementing public charging infrastructure at scale is expensive and slow, leading to concerns that the rate of establishing public EV charging infrastructure will not keep up with the rapid adoption of electric vehicles.

### Summary of the invention

Aspects of the invention are as set out in the independent claims and optional features are set out in the dependent claims. Aspects of the invention may be provided in conjunction with each other and features of one aspect may be applied to other aspects.

The term "proprietor" may to refer to an owner of an EV charger or charging point. The EV charger or charging point may be a privately owned, for example located on a private premises, such as a home, driveway, or garage.

The term "user" may refer to any user of the charger adapter who charges an EV using the charger adapter, coupled to an EV charger.

In a first aspect of the invention there is provided an electric vehicle, EV, charger adapter comprising an incoming power connection point configured to be electrically coupled to an EV charger, and an outgoing power connection point configured to be electrically coupled to an EV. A switch is coupled between the incoming power connection point and the outgoing power connection point. The switch is configured for (i) a closed configuration configured to permit the flow of charge from the incoming power connection point to the outgoing power connection point, and (ii) an open configuration configured to inhibit the flow of charge from the incoming power connection point to the outgoing power connection point. The charger adapter further comprises a processor comprising a communication interface, wherein the communication interface is configured to communicate with a remote device. The processor is coupled to the switch and is configured to transition the switch between (i) the open configuration and (ii) the closed configuration based on signals received by the wireless communication interface.

In some examples, the communication interface may comprise a wireless communication interface. Additionally, or instead, the communication interface may comprise a wired communication interface configured to communicate via a wired connection.

This charger adapter may be retrofitted to an existing EV charger which can be advantageous to provide wireless control to the EV charger. This may enable the usage of the charger to be controlled by a remote device, for example but not limited to via an API or remote server. This may be advantageous to provide security to private electric vehicle owners, for example to prevent unwanted users charging their vehicles using their private charger. For example, during periods when the proprietor of a private charger does not wish to use their charger, the switch may be transitioned into the open configuration in response to a signal from a remote device, thus preventing other users for using the charger and potentially incurring electricity costs at the proprietor's expense. When the proprietor of a private charger does wish to use their charger, the switch may be transitioned into the closed configuration in response to a signal from a remote device to enable the proprietor to use the charger. The proprietor of the EV charger, and/or any other trusted users, may control the signals sent to the EV charger adapter, for example from their respective remote devices, or via an API or remote server.

Furthermore, the charger adapter may enable private electric vehicle chargers or charging points to be converted into chargers available for shared use and/or use by the public. For example, during periods of non-use of a private charger, the private charger may be listed on an online marketplace, analogous to an Airbnb^{™} for electric vehicle chargers or charging points. This may be enabled by the charger adapter which allows interruption control of the EV charger, for example preventing the charger being used by unauthorised users, yet facilitating use by authorised users (for example, users who have booked to use/rent the charger). In preferred examples, users pay for use of the charger and charger adapter; this may be advantageous to facilitate sharing of private EV chargers and charger adapters without the proprietor incurring electricity costs on behalf of others.

The charger adapter may further comprise a securing means configured to reversibly secure the incoming power connection point to at least a portion of an EV charger. This may be advantageous to prevent the charger adapter being uncoupled from the EV charger, for example as a result of tampering by an untrusted person, which may circumvent charger adapter functionality.

In some examples, the incoming power connection point comprises an incoming socket, wherein the incoming socket is configured to receive an incoming EV charging plug of an EV charger. For example, the incoming socket may be configured to receive at least one of a type 2 charging connector, type 1 charging connector, Combined Charging System (CCS) connector, CHAdeMO connector, GB/T 20234.2 or GB/T 20234.3 connector, or any other connector suitable for charging an EV. In some examples, the securing means may be configured to reversibly secure the incoming EV charging plug to the incoming socket. Alternatively, the incoming power connection point comprises an incoming plug, wherein the incoming plug is configured to couple to an EV charging socket of an EV charger. For example, the incoming plug may comprise at least one of a type 2 charging connector, type 1 charging connector, Combined Charging System (CCS) connector, CHAdeMO connector, GB/T 20234.2 or GB/T 20234.3 connector, or any other connector suitable for charging an EV. In some examples, the securing means may be configured to reversibly secure the incoming plug to an EV charging socket of an EV charger.

The EV charger adapter may further comprise a housing. The housing may comprise the incoming power connection point, for example an incoming socket or plug. In some examples, the securing means comprises a lid portion, wherein the lid portion is configured to be reversibly secured to the housing. In some examples, the lid portion is configured to enclose the incoming power connection point. This may be advantageous to prevent the charger adapter being uncoupled from the EV charger, for example as a result of tampering by an untrusted person.

The lid portion may comprise an aperture configured to receive an incoming EV charging cable, coupled to the incoming power connection point of an EV charger, for example an EV charging plug.

Alternatively, or in addition to the lid portion, the securing means may comprise a clamp configured to receive the power connection point of an EV charger, for example an EV charger plug or socket.

The incoming power connection point may be configured to receive at least one power line and at least one signal line from an EV charger. For example, in a preferred embodiment the incoming power connection point may be configured to receive two power lines and one signal line from an EV charger. In the open configuration the switch may be configured to inhibit the flow of charge from at least one of (i) at least one power line, or (ii) the at least one signal line. This may be advantageous only one line needs to be controlled by a switch to prevent unauthorised charging of an EV.

In some examples, the EV charger adapter may comprise a charge meter. The charge meter may be configured to measure the flow of charge from the incoming power connection point to the outgoing power connection point. This may be advantageous to measure the amount of electricity, power, and/or charge used during a specified period of charging for an EV. This may be particularly advantageous for sharing a private charger as the proprietor may measure and/or monitor usage by other users. The charge meter may comprise but is not limited to an electricity meter, voltmeter, and/or ammeter.

In some examples, the switch may be configured to be transitioned from the closed configuration into the open configuration based on an indication that the amount of charge measured by the charge meter is equal to or greater than a threshold. In some examples, the threshold may be determined based on a pre-determined charging amount requested by a user. The pre-determined charging amount may correspond to an amount of charge paid for by the user. Purely for illustrative purposes, a user may request and pay for 20kW of charging power; thus, the switch may be configured to be transitioned into the open configuration after 20kW has passed from the incoming power connection point to the outgoing power connection point, however the skilled person will understand that any other charging amount may be requested. The charge meter may be configured to be reset to zero upon the switch being transitioned into the open configuration.

In some examples, the EV charger adapter may comprise a clock module. The clock module may be configured to measure the amount of time that the switch is in the closed configuration. Alternatively, or in addition, the clock module may be configured to record the times at which the switch is transitioned between the open and closed configuration, and vice versa. This may be advantageous to measure the amount of power used during a specified period of charging for an EV. This may be particularly advantageous for sharing a private charger as the proprietor may measure and/or monitor usage by other users.

In some examples, the switch may be configured to be transitioned from the closed configuration into the open configuration based on an indication that the duration measured by the clock module is equal to or greater than a threshold. In some examples, the threshold may be determined based on a pre-determined duration requested by a user. The pre-determined charging duration may correspond to an amount of charging time paid for by the user. Purely for illustrative purposes, a user may request and pay for a 2-hour charge period, however the skilled person will understand that any other duration may be requested. In some examples, the clock module may be configured to reset the duration upon the switch configuration being transitioned into the open configuration. Alternatively, or in addition, the switch may be configured to be transitioned from the closed configuration to the open configuration, and/or from the open configuration to the closed configuration, based on an indication of the time measured by the clock module. The indication of the time may correspond to a time interval paid for by the user. Purely for illustrative purposes, a user may request and pay for a charging period between 13:00-15:00; thus, the switch is transitioned into the closed configuration at 13:00 and subsequently transitioned into the open configuration at 15:00, however the skilled person will understand that any other time interval may be requested.

The switch may be configured to be transitioned between the open configuration and the closed configuration based on the application of a voltage, for example wherein the switch comprises a physical relay switch.

The outgoing power connection point may comprise an outgoing EV charging cable. This may be advantageous to allow the outgoing power connection point to be moveable such that it may be arranged to couple with an EV displaced from the charger adapter unit. In some examples, the outgoing EV charging cable comprises a plug configured to charge an EV. For example, the outgoing plug may comprise at least one of a type 2 charging connector, type 1 charging connector, Combined Charging System (CCS) connector, CHAdeMO connector, GB/T 20234.2 or GB/T 20234.3 connector, or any other connector suitable for charging an EV. The plug may be arranged at the distal end of the charging cable relative to the charger adapter. Alternatively, outgoing power connection point may comprise a socket, configured to receive an EV charging cable electrically coupled to an EV. For example, the outgoing socket may be configured to receive at least one of a type 2 charging connector, type 1 charging connector, Combined Charging System (CCS) connector, CHAdeMO connector, GB/T 20234.2 or GB/T 20234.3 connector, or any other connector suitable for charging an EV.

The EV charger adapter may comprise a verification means configured to verify the identity of a user. In some examples, the verification means may comprise a user input module, for example but not limited to a keypad or touchscreen, wherein the user may be required to verify their identity by inputting verification information. Verification information may comprise a password, passcode, username, or other user identifier. In other examples, the verification means may comprise a short-range wireless communication interface configured to identify the presence of a user in the physical vicinity of the charger adapter, such as but not limited to Bluetooth^{™}, for example by identifying a remote device within short-range of the changer adapter. The switch may be configured to be transitioned into the closed configuration based on an indication that the identity of a user has been verified. This may be advantageous to confirm the identity of a user in the physical vicinity of the charger adapter. This may prevent unauthorised individuals from hijacking use the EV charging adapter in the absence of an authorised user. For example, purely for illustrative purposes, a user may request and pay for a charging period between 13:00-15:00. In a scenario where the user does not arrive until 13:10, the switch is not transitioned into the closed configuration at 13:00 until the identity of the user of the charger adapter is verified. This prevents any opportunistic bystanders from charging their vehicles in the interim by accessing the charger adapter from 13:00 to 13:10.

In some examples, the EV charger adapter may be weatherproof, and, optionally waterproof. This may be advantageous as the EV charger adapter may be stored outside and is configured to carry high voltages, thus weatherproofing and/or waterproofing may improve the safety of the system to prevent corrosion, malfunction, and electrocution. For example, the EV charger adapter housing may be weatherproof and/or waterproof. In some examples, at least the processor and/or switch may be sealed within the housing, for example but not limited to by hermetic sealing.

In a second aspect of the invention, there is provided a method for charging an electric vehicle, EV. The method comprises receiving, by a wireless communication interface coupled to a processor, a request to charge an EV. The request may be received from a remote device, for example including, a user device, an API, or a remote server.

The method further comprises receiving an indication that an EV charger is electrically coupled to an incoming power connection point. Based on the request received by the wireless communication interface and the indication that an EV charger is electrically coupled to the incoming power connection point, the method further comprises signalling, by the processor, to transition a switch coupled between the incoming power connection point and an outgoing connection point from an open configuration to a closed configuration.

The method may further comprise receiving, by the processor, an indication that an EV is electrically coupled to an outgoing power connection point. Signalling to transition the switch into the closed configuration may additionally be based on the indication that an EV is electrically coupled to the outgoing power connection point.

In some examples, the request to charge an EV comprises a requested charging duration, and the method further comprises measuring, using a clock module, the duration that the switch is in the closed position. The method may further comprise signalling, by the processor, to transition the switch from the closed configuration into the open configuration based on an indication that the duration measured by the clock module is equal to or greater than the requested charging duration. The requested charging duration may correspond to an amount of charging time paid for by the user. Purely for illustrative purposes, a user may request and pay for a 2-hour charge period, thus the processor would signal to transition the switch into the open configuration based on an indication that the duration that the switch has been in the closed configuration, measured by the clock module, is equal to or greater than 2 hours, or 120 minutes. The skilled person will understand that any other duration may be requested.

Alternatively, or in addition, the method may comprise signalling by the processor to transition the switch from the closed configuration to the open configuration, and/or from the open configuration to the closed configuration, based on an indication of the time, for example measured by a clock module. The indication of the time may correspond to a requested time interval, for example paid for by the user. Purely for illustrative purposes, a user may request and pay for a charging period between 13:00-15:00; thus, the processor may signal to transition the switch into the closed configuration at 13:00 and subsequently signal to transition the switch into the open configuration at 15:00, however the skilled person will understand that any other time interval may be requested.

In some examples, the request to charge an EV comprises a requested charging amount, and the method further comprises measuring, using a charge meter, the amount of charge flow from the incoming power connection point to the outgoing power connection point. The method may further comprise signalling, by the processor, to transition the switch from the closed configuration into the open configuration based on an indication that the amount of charge measured by the charge meter is equal to or greater than the requested charging amount.

In some examples, the method may further comprise sending, by the wireless communication interface, a verification request in response to receiving the request to charge an EV. The method may further comprise receiving a verification signal in response to the verification request. The signal by the processor to transition the switch into the closed configuration may additionally be based at least in part on the verification signal. In some examples, the verification signal may comprise a verification information input by a user, for example but not limited to verification information input via a user input module, for example but not limited to a keypad or touchscreen. Verification information may comprise a password, passcode, username, or other user identifier. In other examples, verification information may comprise location information of a user, for example determined by GPS or a short-range wireless communication interface configured to identify the presence of a user in the physical vicinity of the charger adapter, such as but not limited to Bluetooth^{™}, for example by identifying a remote device within short-range of the changer adapter. The switch may be configured to be transitioned into the closed configuration based on an indication that the identity of a user has been verified. This may be advantageous to confirm the identity of a user in the physical vicinity of the charger adapter. This may prevent unauthorised individuals from hijacking use the EV charging adapter in the absence of an authorised user.

Signalling to transition the switch from the open configuration to the closed configuration, and/or from the closed configuration to the open configuration, may comprise applying a voltage to the switch.

The method of the second aspect of the invention may be suitable for use with the EV charger adapter of the first aspect of the invention.

In another aspect of the invention, there is provided a computer program product comprising program instructions configured to program a programmable device to perform the method of the second aspect of the invention.

In another aspect of the invention, there is provided an EV charger system. The system comprises an EV charger, comprising a power source and an outgoing power connection point, wherein the outgoing power connection point is configured to be electrically coupled to an EV and a switch. The switch is coupled between the power source and the outgoing power connection point, the switch being configured for (i) a closed configuration configured to permit the flow of charge from the power source to the outgoing power connection point, and (ii) an open configuration configured to inhibit the flow of charge from the power source to the outgoing power connection point. The system further comprises a processor, coupled to the switch, comprising a wireless communication interface, wherein the wireless communication interface is configured to communicate with a remote device. The processor is configured to transition the switch between (i) the open configuration and (ii) the closed configuration based on signals received by the wireless communication interface.

This may be advantageous to provide security to private electric vehicle owners, for example to prevent unwanted users charging their vehicles using their private EV charger. For example, during periods when the proprietor of a private charger does not wish to use their charger, the switch may be transitioned into the open configuration in response to a signal from a remote device, thus preventing other users for using the charger and potentially incurring electricity costs at the proprietor's expense. When the proprietor of a private charger does wish to use their charger, the switch may be transitioned into the closed configuration in response to a signal from a remote device to enable the proprietor to use the charger. The proprietor of the EV charger, and/or any other trusted users, may control the signals sent to the EV charger adapter, for example from their respective remote devices, or via an API or remote server.

Furthermore, the charger system may enable private electric vehicle chargers or charging points to be converted into chargers available for shared use and/or use by the public. For example, during periods of non-use of a private charger, the private charger may be listed on an online marketplace, analogous to an Airbnb^{™} for electric vehicle chargers or charging points. This may be enabled by the wirelessly controlled switch which allows interruption control of the EV charger, for example preventing the charger being used by unauthorised users, yet facilitating use by authorised users (for example, users who have booked to use/rent the charger). In preferred examples, users pay for use of the charger and charger adapter; this may be advantageous to facilitate sharing of private EV chargers without the proprietor incurring electricity costs on behalf of others.

In some examples, the system may comprise a charge meter. The charge meter may be configured to measure the flow of charge from the incoming power connection point to the outgoing power connection point. This may be advantageous to measure the amount of power or charge used during a specified period of charging for an EV. This may be particularly advantageous for sharing a private charger as the proprietor may measure and/or monitor usage by other users.

In some examples, the switch may be configured to be transitioned from the closed configuration into the open configuration based on an indication that the amount of charge measured by the charge meter is equal to or greater than a threshold. In some examples, the threshold may be determined based on a pre-determined charging amount requested by a user. The pre-determined charging amount may correspond to an amount of charge paid for by the user. In some examples, the charge meter may be configured to be reset to zero upon the switch being transitioned into the open configuration.

In some examples, the EV charger system may comprise a clock module. The clock module may be configured to measure the amount of time that the switch is in the closed configuration. This may be advantageous to measure the amount of power used during a specified period of charging for an EV. This may be particularly advantageous for sharing a private charger as the proprietor may measure and/or monitor usage by other users.

In some examples, the switch may be configured to be transitioned from the closed configuration into the open configuration based on an indication that the duration measured by the clock module is equal to or greater than a threshold. In some examples, the threshold may be determined based on a pre-determined duration requested by a user. The pre-determined charging duration may correspond to an amount of charging time paid for by the user. In some examples, the clock module may be configured to reset the duration upon the switch configuration being transitioned into the open configuration. Alternatively, or in addition, the switch may be configured to be transitioned from the closed configuration to the open configuration, and/or from the open configuration to the closed configuration, based on an indication of the time measured by the clock module. The indication of the time may correspond to a time interval paid for by the user.

The switch may be configured to be transitioned between the open configuration and the closed configuration based on the application of a voltage, for example wherein the switch comprises a physical relay switch.

The outgoing power connection point may comprise an outgoing EV charging cable. This may be advantageous to allow the outgoing power connection point to be moveable such that it may be arranged to couple with an EV displaced from the system. In some examples, the outgoing EV charging cable comprises a plug configured to charge an EV. The plug may be arranged at the distal end of the charging cable relative to the charger adapter. Alternatively, outgoing power connection point may comprise a socket, configured to receive an EV charging cable electrically coupled to an EV.

The system may comprise a verification means configured to verify the identity of a user. In some examples, the verification means may comprise a user input module, for example but not limited to a keypad or touchscreen, wherein the user may be required to verify their identity by inputting verification information. Verification information may comprise a password, passcode, username, or other user identifier. In other examples, verification information may comprise a short-range wireless communication interface, such as but not limited to BLUETOOTH^{™}, configured to identify the presence of a user in the physical vicinity of the system, for example by identifying a remote device within short-range of the charger system. The switch may be configured to be transitioned into the closed configuration based on an indication that the identity of a user has been verified.

This may be advantageous to confirm the identity of a user in the physical vicinity of the charger adapter and may prevent unauthorised individuals from hijacking use the EV charging adapter in the absence of an authorised user.

### Drawings

Embodiments of the disclosure will now be described, by way of example only, with reference to the accompanying drawings, in which:
Fig. 1A shows a schematic of an example EV charger adapter device in use with an electric vehicle and EV charger.
Fig. 1B shows another schematic of an example EV charger adapter device in use with an electric vehicle and EV charger.
Fig. 2A shows another schematic of an example EV charger adapter device, comprising a securing means, in use with an electric vehicle and EV charger.
Fig. 2B shows an isometric view of the example charger adapter of Fig. 2A.
Figs. 3A-3D show another example charger adapter, comprising an alternative securing means.

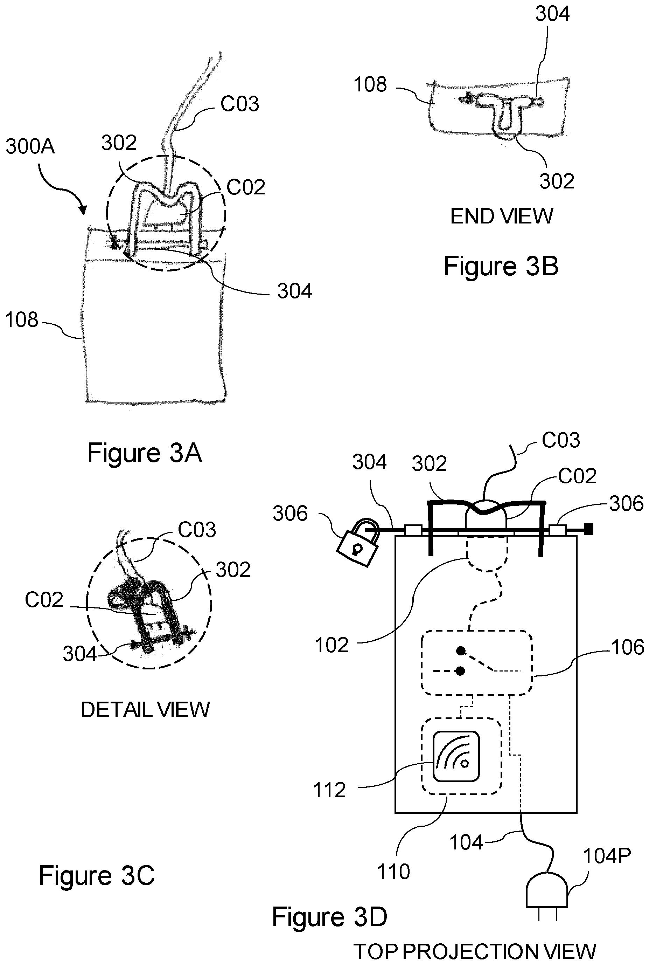

Fig. 3A shows a perspective view of the example charger adapter.
Fig. 3B shows an end view of the example charger adapter of Fig. 3A.
Fig. 3C shows a detail view of the example charger adapter of Fig. 3A.
Fig. 3D shows a top projection view of the example charger adapter of Fig. 3A.

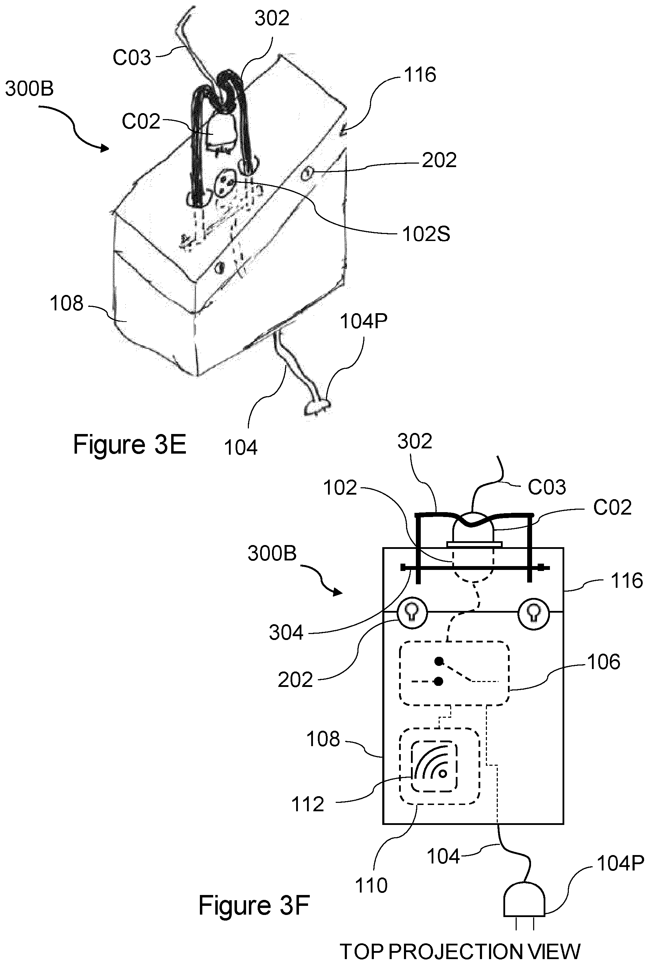

Fig. 3E shows another example charger adapter comprising a securing means.
Fig. 3F shows a top projection view of the example charger adapter of Fig. 3E.

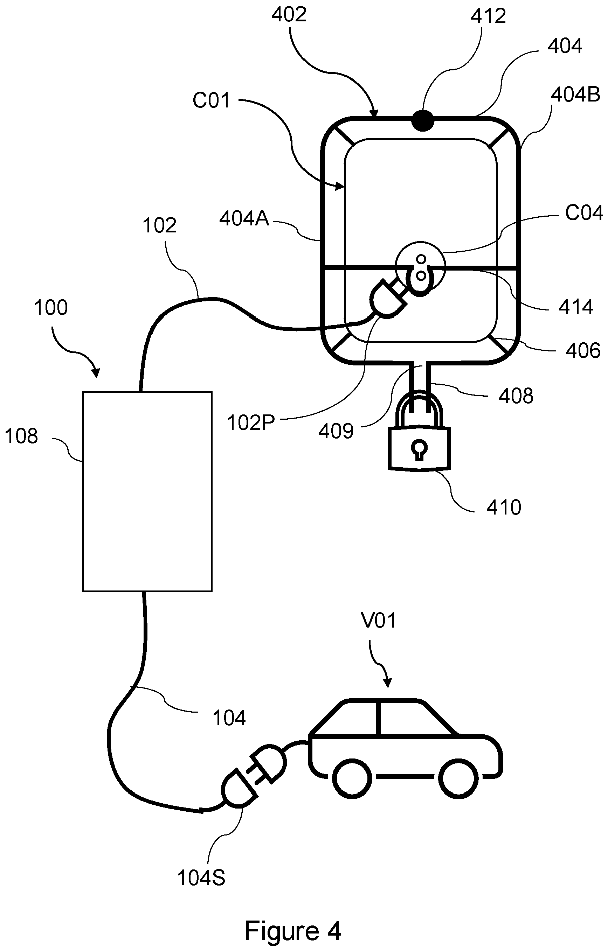

Fig. 4 shows another example EV charger adapter device in use with an electric vehicle and EV charger, comprising a securing means configured to be retrofitted to the EV charger.

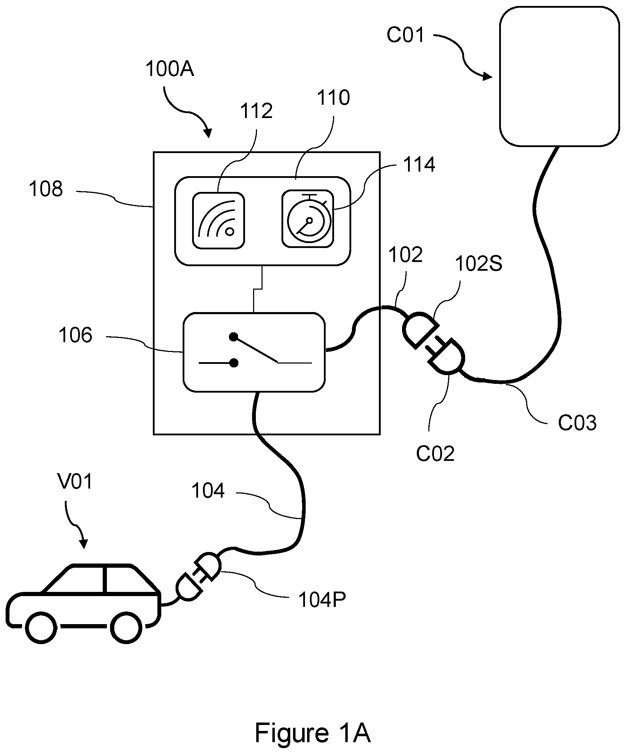

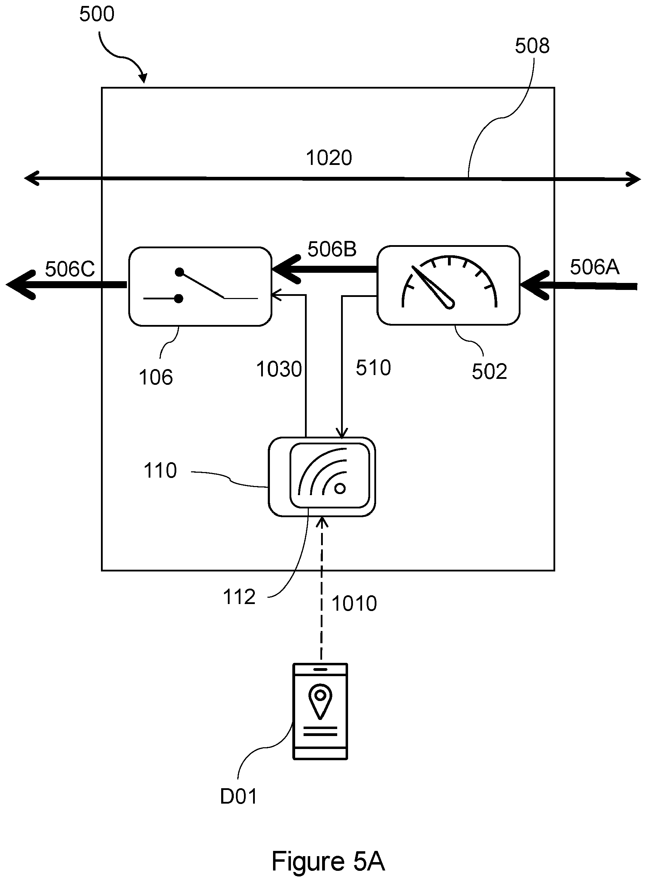

Fig. 5A shows an example schematic illustrating an example EV charger adapter, such as the EV charger adapter of any of Figs. 1A to 4, in use.

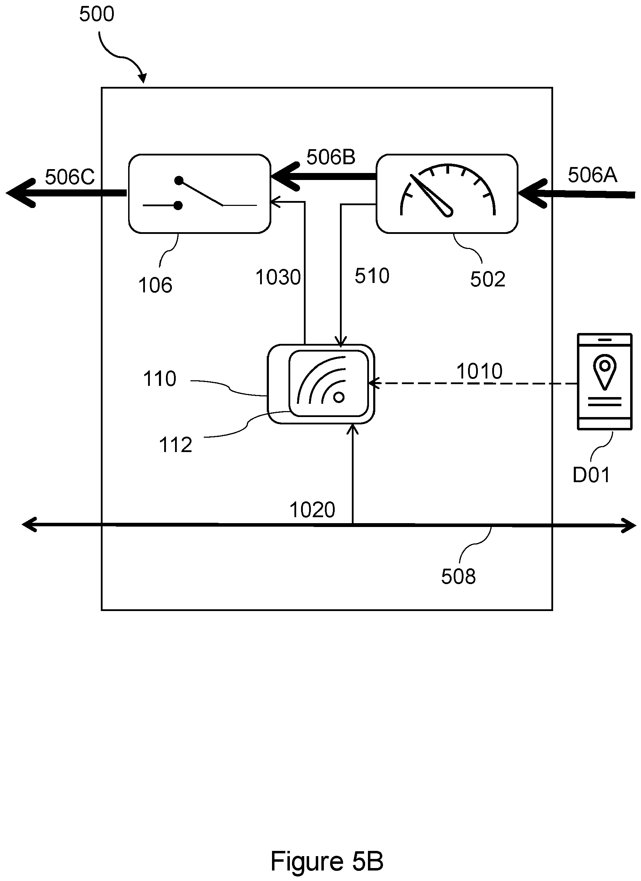

Fig. 5B shows an example schematic illustrating an example EV charger adapter similar to Fig. 5A.

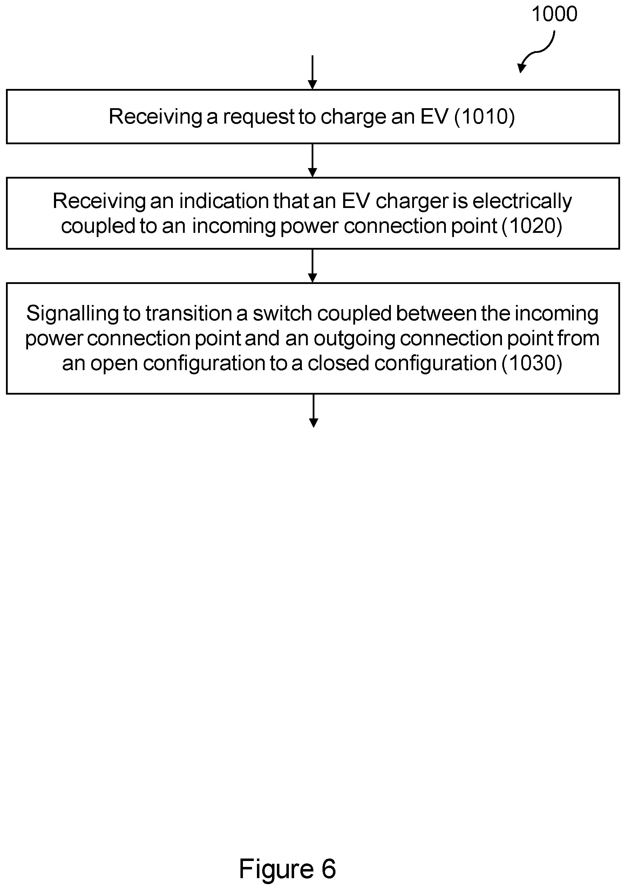

Fig. 6 shows a schematic of an example method for charging an EV, for example configured to be performed by the processor of any of Figs. 1A to 5B.

### Specific description

Embodiments of the claims relate to an EV charger adapter, EV charging system, and a method for charging an EV.

It will be appreciated from the discussion above that the embodiments shown in the Figures are merely exemplary, and include features which may be generalised, removed or replaced as described herein and as set out in the claims.

**Fig. 1A** shows an example electric vehicle charger adapter device 100A in use with an electric vehicle V01 and EV charger C01. The device 100A comprises an incoming power connection point 102 and an outgoing EV charging cable 104. In this example, the incoming power connection point is a socket 102S, however the skilled person will understand that in other examples the incoming power connection point may comprise a plug. A switch 106 is coupled between the incoming socket 102 and the outgoing charging cable 104. The device 100A further comprises a processor 110 coupled to the switch 106. The processor 110 comprises a wireless communication interface 112. In this example, the processor 110 further comprises a timer module 114.

The switch 106 and processor 110 are arranged within a housing 108.

In this example, the incoming socket 102S comprises a cable coupled to the housing 108. However, the skilled person will understand that the socket 102S may alternatively be arranged on a surface of the housing 108.

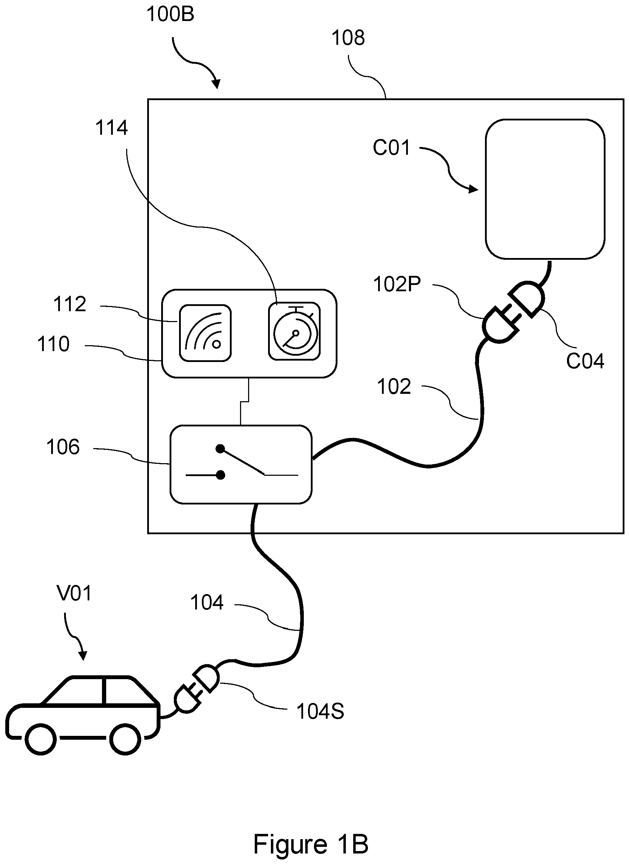

The outgoing EV charging cable 104 comprises a proximal end coupled to the device housing 108, and a distal end external to the device housing 108. In this example, the distal end of the outgoing charging cable 104 comprises a plug 104P, however the skilled person will understand that in other examples, the outgoing EV charging cable 104 may comprise a socket, for example as shown in Fig. 1B.

The switch 106 is configured for (i) a closed configuration and (ii) an open configuration. In the closed configuration, the switch 106 is configured to permit the flow of charge from the incoming socket 120 to the outgoing charging cable 104. In the open configuration, the switch 106c is configured to inhibit the flow of charge from the incoming socket 102 to the outgoing charging cable 104.

The wireless communication interface 112 is configured to communicate with a remote device, for example via an API. The timer module 114 is configured to measure the amount of time that the switch is in the closed configuration.

The processor 110 is configured to transition the switch 106 between the open configuration and the closed configuration, based on signals received by the wireless communication interface 112 from a remote device, and based on the timer module 114.

The incoming socket 102 is configured to receive an incoming EV charging plug coupled to an EV charger C01. The outgoing charging cable 104 is configured to be electrically coupled to an electric vehicle V01.

In use, the incoming socket 102 received an incoming EV charging plug C02 such that the incoming socket is electrically coupled to an EV charger C01. The charging plug C02 is coupled to the charger C01 via an incoming charging cable C03.

In this example, the default position of the switch 106 is in the open configuration.

A user may then connect an EV, for example V01, to the outgoing charging cable 104 for charging. The user may also send a request to charge the EV V01 using a user remote device. The request may be sent as a result of the user completing a booking through an online booking platform, for example analogous to AirBnB^{™} for electric vehicle chargers. In this example, the request comprises a requested charging duration (or "booking time slot"), for example 2 hours. This request is received by the processor 110 of the adapter device 100A, via the wireless communications interface 112. In a preferred example, the request to charge an EV is sent to the charger adapter device 100A from an API, in response to user input.

In response to the request, the processor 110 signals to the switch 106 to transition into the closed configuration. In this example, this involves the processor 110 applying a small voltage to the switch 106.

Charge then flows from the charger C01 to the EV V01, via the incoming socket 102 to the outgoing cable 104. Thus, the EV V01 may be charged.

Upon the switch 106 being transitioned into the closed configuration, the timer module 114 begins counting the duration that the switch is in the closed position, and/or the duration that charge flows via the incoming socket 102 to the outgoing cable 104. Once the duration measured by the timer module 114 is equal to or greater than the requested charging duration (i.e., the requested charging duration has elapsed), the processor 110 signals to transition the switch 106 into the open configuration.

Charge flow from the charger C01 to the EV V01 is then inhibited and charging of EV V01 is ceased.

In this example, the switch 106 is transitioned into the open configuration based on an indication from the timer module 114. Alternatively, or in addition, the device 100A may further comprise a charge meter (not shown). The charge meter may be configured to measure the flow of charge from the incoming socket 102 to the outgoing EV charging cable 104. In use, upon the switch 106 being transitioned into the closed configuration, the charge meter begins measuring the amount of charge flow from the incoming socket 102 to the outgoing cable 104. Once the measured amount of charge is equal to or greater than a pre-determined threshold (for example, wherein the pre-determined threshold is an amount included in the request to charge the EV), the processor 110 signals to transition the switch 106 into the open configuration.

**Fig. 1B** shows another example EV charger adapter device 100B in use with an electric vehicle V01 and EV charger C01. In this example, the housing 108 is arranged to encompass the switch 106, the processor 110, and the incoming power connection point 102. In use, the housing 108 is also arranged to encompass the EV charger connection point C04 and, optionally, a portion of the charger C01. This may be advantageous to prevent the incoming power connection point 102 being uncoupled from the EV charger connection point C04. In this example, the housing 108 encompasses the entire charger C01.

In the example shown in Figure 1B, the incoming power connection point 102 comprises a plug 102P and the EV charger connection point C04 comprises a socket; however, the skilled person will understand that in other examples, the incoming power connection point 102 may comprise a socket and the EV charger connection point C04 may comprise a plug, for example as shown in Fig. 1A.

The housing 108 may be configured to be retrofitted onto or over at least a portion of the charger C01. In some examples, the housing 108 may be configured to be mounted to a wall, for example over at least a portion of the charger C01. This may be advantageous to prevent the EV charger adapter 100B, including the incoming power connection point 102, from being removed from the charger C01.

The EV charger adapter device 100B, including the processor 110 and switch 106, may then be operated as described above in relation to Fig. 1A.

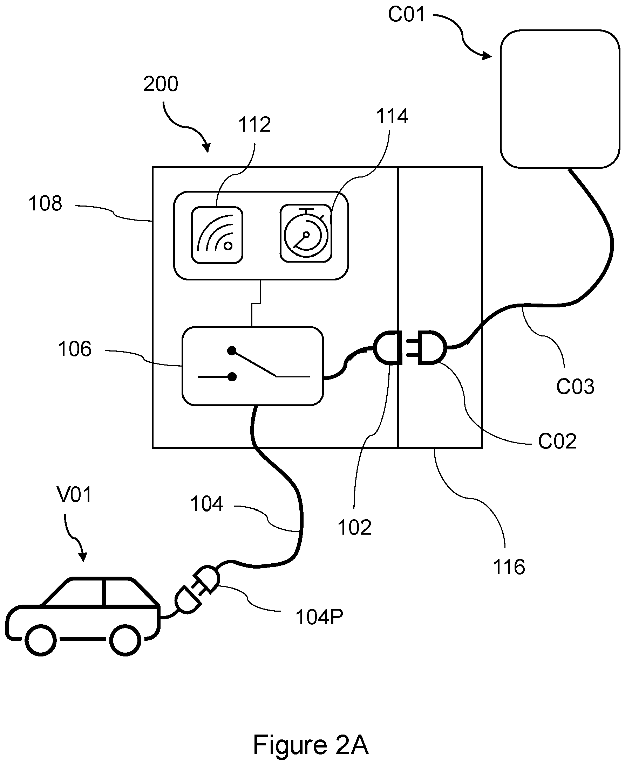

**Fig. 2A** shows another example EV charger adapter device 200 in use with an electric vehicle V01 and EV charger C01. In addition to the features and functionality described above in relation to Fig. 1A, the device 200 further comprises a lid portion 116, coupled to the housing 108.

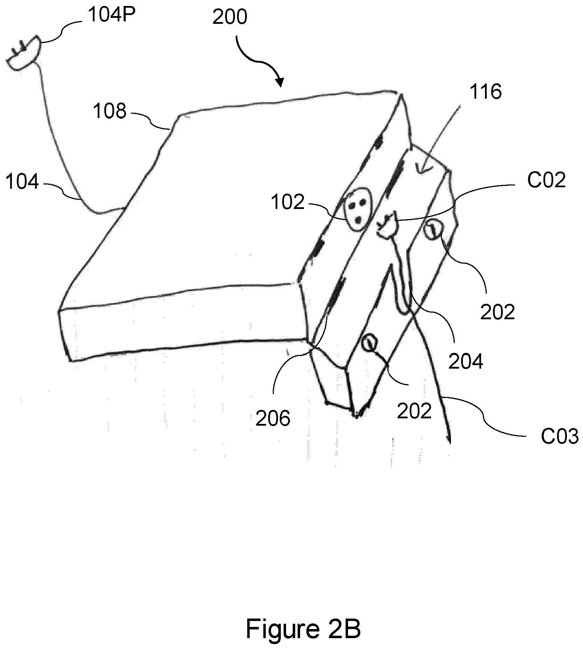

The lid portion 116 may be coupled to the housing 108 by at least one hinge 206. As shown in **Fig. 2B****,** the lid portion 116 is coupled to the housing 108 by a pair of hinges arranged along an edge of the lid portion 116.

The lid portion 116 also comprises an aperture 204. The aperture 204 is arranged at least partially along an edge of the lid portion 116. In this example, the aperture 204 comprises a slot, wherein the longitudinal axis of the slot is perpendicular to the edge of the lid portion 116.

The lid portion 116 and/or housing 108 further comprises at least one locking mechanism 202. In this example, the lid portion 116 comprises two key-operated lock mechanisms. However, the skilled person will understand that other locking mechanisms may be used, including but not limited to combination locks, dial locks, padlocks, digital locks, or smart locks. In this example, the locking mechanism 202 is arranged along an edge of the lid portion116 opposite to the hinges 206.

The lid portion 116 is configured to be transitioned between an open configuration and a closed configuration. In the open configuration, the lid portion 116 is configured to be pivoted about the at least one hinge 206 to be displaced from the housing 108. In the closed configuration, the lid portion 116 is configured to be engaged with the housing 108.

The locking mechanism 202 is reconfigured to reversibly lock the lid portion 116 to the housing 108 in the closed configuration.

The diameter of the aperture 204 in the lid portion 116 is configured to be equal to or greater than the incoming EV charging cable C03, such that the aperture 204 is configured to receive the incoming EV charging cable C03. The aperture 204 is additionally configured to be smaller than the diameter of the incoming EV charging plug C02, such that the plug C02 does not fit through the aperture 204.

The depth of the lid portion 116 may be substantially the same or greater than the depth of the incoming EV charging plug C02, such that when the lid portion 116 is in the closed configuration, the incoming EV charging plug C02 is enclosed by the lid portion 116 and inhibited from being removed from the incoming power connection point 102.

In use, the incoming EV charging cable C03 may be inserted and/or removed from the aperture 204 when the lid portion 116 is in the open configuration. The EV charger plug C02 may then be electrically coupled to the incoming power connection point 102.

The lid portion 116 may then be engaged with the housing 108 in the closed configuration, and reversibly locked by the locking means 202. The EV charging cable C03 and plug C02 are prevented from being removed and electrically uncoupled from the incoming power connection point 102 when the lid portion 116 is in the closed configuration.

The EV charger adapter device 200, including the processor 110 and switch 106, may then be operated as described above in relation to Fig. 1A.

**Figs. 3A-3D** shows another example EV charger adapter device 300A. In addition to the features and functionality described above in relation to Fig. 1A, the device 300 further comprises a securing means, wherein the securing means comprises a clamp 302.

The housing 108 comprises at least one surface comprising an incoming power connection point 102, for example an incoming socket. On the same surface, the housing 108 further comprises at least a pair of fastening buckles 306 arranged on opposite sides of the incoming power connection point 102.

In the example shown, the clamp 302 comprises a curved portion coupled between two parallel struts. The curved portion couples together the proximal end of each strut. The curved portion has a substantially semi-circular or "horseshoe-shape". The parallel struts extend in the same direction, orthogonally from the plane of the curved portion. The distal end of each parallel strut comprises an aperture.

Alternatively, or in addition, the clamp 302 may comprise a cable stop or cable clamp.

The securing means further comprises a bar 304. The diameter of the bar 304 is sized to fit through the apertures at the distal end of each parallel strut of the clamp 302, and to fit through the pair of fastening buckles 306.

The clamp 302 is configured to be reversibly coupled to the housing 108 such that the clamp 302 may reversibly secure an EV charger connection point, for example an incoming EV charger plug C02, to the incoming power connection point 102 of the charger adapter 300A.

The curved portion of the clamp 302 is configured to allow passage of an EV charger cable C03 through the clamp and prevent passage of an EV charger power connection point, such as a plug C02, through the clamp 302.

In use, an EV charger connection point, such as a EV charger plug C02, is electrically coupled to the incoming power connection point, such as an incoming socket 102, of the EV charger 300A. The clamp 302 is then positioned such that the curved portion is arranged to abut the EV charger plug C02 on the opposite surface of the plug C02 to the incoming power connection point 102.

The parallel struts of the clamp 302 extend towards the EV charger adapter housing 108 and either abut a surface of the housing 108 or extend through a pair of apertures into the housing 108.

The position of the clamp 302 is secured to the housing 108 by passing the bar 304 through the apertures in each parallel strut and the fastening buckles 306 of the housing 108. The bar 304 may then be secured, for example by a nut or locking mechanism, including but not limited to padlocking the bar as shown in Figure 3A.

The EV charger plug C02 is thus prevented from being removed from the incoming power connection point 102 without unlocking and removing the clamp 302.

The EV charger adapter device 300A, including the processor 110 and switch 106, may then be operated as described above in relation to Fig. 1A.

**Figs. 3E and 3F** shows another example EV charger adapter device 300B. In addition to the features and functionality described above in relation to Figs. 2A and 2B, the securing means further comprises a clamp 302 and bar 304.

In this example, the incoming power connection point 102 is arranged on an outer surface of the lid portion 116, coupled to the housing 108.

An example clamp 302 and bar 304 are described in more detail in relation to Figures 3A-3D.

Alternatively, or in addition, the clamp 302 may comprise a cable stop or cable clamp.

In use, an EV charger connection point, such as a EV charger plug C02, is electrically coupled to the incoming power connection point, such as an incoming socket 102, of the EV charger 300A.

The clamp 302 is then positioned such that the curved portion is arranged to abut the EV charger plug C02 on the opposite surface of the plug C02 to the incoming power connection point 102.

The parallel struts of the clamp 302 extend towards the lid portion116 and extend through a pair of apertures in the lid portion 116 into a cavity between the housing 108 and the lid portion 116.

The lid portion 116 may then be transitioned into the open configuration and the position of the clamp 302 is secured by passing the bar 304 through the apertures in each parallel strut within the cavity of the lid portion 116. The bar 304 may then be secured, for example by a nut or locking mechanism.

The lid portion 116 may then be closed and locked, using locking mechanism 202.

The EV charger plug C02 is thus prevented from being removed from the incoming power connection point 102 without unlocking and opening the lid portion 116, and removing the clamp 302.

The EV charger adapter device 300A, including the processor 110 and switch 106, may then be operated as described above in relation to Fig. 1A.

**Fig. 4** shows another example EV charger adapter device 100 and a clamp mechanism 402.

The clamp mechanism 402 comprises a housing 404 which is configured to fit onto at least a portion of an EV charger C01. The housing 404 has a substantially rectangular shape, however the skilled person will understand that other shapes may be used. The clamp mechanism housing 404 comprises an opening 409 along at least one edge of the housing 404. The housing 404 may further comprise at least one hinge portion 412, wherein the hinge portion 412 couples together a first portion of the housing 404A and a second portion of the housing 404B.

The clamp mechanism 402 may comprise a plurality of adjustable supports 406, arranged at least in part around the internal surface of the clamp mechanism housing 404.

The clamp mechanism housing 404 further comprises a securing portion 408. In this example, the securing portion comprises a pair of parallel protrusions, wherein a first protrusion is arranged on the first portion of the housing 404A and a second protrusion is arranged opposite to the first protrusion, on the second portion of the housing 404B. The first and second protrusions are on opposite sides of the opening 409. In this example, each protrusion comprises an aperture.

The clamp mechanism 402 further comprises a clamp bar 414.

The clamp bar 414 comprises a curved portion, having a substantially semi-circular or "horseshoe-shape". Alternatively, or in addition, the clamp bar 414 may comprise a cable stop or cable clamp.

The clamp mechanism 402 is configured to attach to an EV charger C01. In this example, the clamp mechanism comprises a housing 404 which is configured to fit onto at least a portion of an EV charger C01. The housing 404 is configured to be manipulated about the hinge portion 412 such that the housing 404 may be retrofitted onto an EV charger C01.

The plurality of adjustable supports 406 are configured to be adjustable such that the housing 404 may be correctly sized and fitted to the EV charger C01. For example, the position of the adjustable supports may be adjusted to adjust at least one of the width, height, or depth of the clamp mechanism 402, such that the housing 404 is correctly sized to engage with the EV charger C01.

The first protrusion and the second protrusion of the securing portion are configured to be securely coupled together. For examples, the apertures of the securing portion protrusions 408 are configured to receive a securing means, such as a padlock 410.

The clamp bar 414 is configured to reversibly secure the incoming power connection point 102 of the charger adapter 300A to an EV charger connection point, for example an incoming EV charger plug C02.

The curved portion of the clamp bar 414 is configured to allow passage of the incoming cable, coupled to the incoming power connection plug 102P, through curved portion of the clamp bar 414, yet prevent passage of the incoming plug 102P through the clamp bar 402.

In use, the incoming charging plug 102P is electrically coupled to a socket C04 on an EV charger C01. The clamp mechanism 402 may then be reversibly attached to the EV charger C01. In this example, the first and second portions of the housing 404A and 404B are displaced about the hinge portion 412 to widen the opening 409 such that the clamp mechanism housing 404 is fitted around the EV charger C01. The first and second portions of the housing 404A and 404B are subsequently pivoted about the hinge portion 412 to bring reduce the opening 409 and bring the first and second protrusions of the securing portion 408 together. The adjustable supports 406 to adjust at least one of the width, height, or depth of the clamp mechanism 402, such that the housing 404 is correctly sized to engage with the EV charger C01.

The clamp bar 414 is positioned such that the curved portion is arranged to abut the incoming plug 102P on the opposite surface of the plug 102P to the EV charger connection socket C04.

The clamp mechanism 402 is then reversibly secured onto the EV charger C01 by a securing means 410, for example by padlocking together the securing portion 408, as shown. This prevents the clamp mechanism housing 404 being removed from the EV charger C01; thus preventing the incoming charging plug 102P being removed or electrically uncoupled from the socket C04 of the EV charger C01.

The EV charger adapter device 100 may then be operated as described above in relation to Fig. 1A.

The example shown in Figure 4 comprises a hinge portion 412, however the skilled person will understand that this is optional. For example, in other examples the clamp mechanism housing 404 may not comprise a hinge portion 412, and instead, the clamp mechanism is made of a resilient material, such as metal or resilient polymer. The clamp mechanism housing 404 is configured to be reversibly deformed such the opening 409 is stretched such that the housing 404 may be retrofitted onto an EV charger C01. Alternatively, the first and second portions of the clamp mechanism housing, 404A and 404B, may be separate pieces which are configured to be securely coupled together to be retrofitted onto an EV charger C01, for example by bolting or locking.

**Figs. 5A** **and** **5B** show example schematics illustrating an example EV charger adapter 500 in use, for example the EV charger adapters of Figs. 1A to 4.

The EV charger adapter 500 comprises a switch 106. The switch 106 is coupled in between an incoming power line 506A to an outgoing power line 506C. This switch 106 may be a relay switch.

The incoming power line 506A may be coupled to an EV charger, for example via an incoming power connection point, such as the incoming power connection point 102 shown in Figs. 1A to 4.

The outgoing power line 506C may be coupled to an EV, for example via an outgoing power connection point, such as the outgoing power connection point 104 shown in Figs. 1A to 4.

In addition to the power line 506A, 506B, 506C, the EV charger adapter 500 comprises a signal line 508. The signal line 508 may be coupled between an EV charger, for example via an incoming power connection point, and an EV, for example via an outgoing power connection.

The EV charger adapter further comprises a processor 110 comprising a wireless communication interface 112, coupled to the switch 106.

Optionally, the EV charger adapter 500 further comprises a charge meter 502 coupled between the incoming power supply 506A and the outgoing power supply 506C. In this example, the charge meter 502 is arranged between the incoming power supply 506A and the switch 106. The charge meter 502 may comprise but is not limited to at least one of an electricity meter, voltmeter, and/or ammeter. The charge meter 502 may additionally be coupled to the wireless communication interface 112.

The switch 106 is configured for (i) a closed configuration and (ii) an open configuration. In the closed configuration, the switch 106 is configured to permit the flow of electricity from the incoming power supply 506A to the outgoing power supply 506C, via the charge meter 502. In the open configuration, the switch 106c is configured to inhibit the flow of charge from incoming power supply 506A to the outgoing power supply 506C.

The wireless communication interface 112 may be configured to communicate 1010 with a remote device D01. For example, the wireless communication interface 112 may be configured for at least one of 3G, 4G, or 5G network communication, BLUETOOTH^{™}, and/or Wi-Fi.

The switch 106 is configured to be transitioned between the open configuration and the closed configuration based on signals received 1010 by the wireless communication interface 112 from a remote device D01.

The charge meter 502 is configured to measure the flow of electricity from the incoming power supply 506A to the outgoing power supply 506C. The charge meter 502 may be configured to send an indication of the amount of electricity measured 510 to the wireless communications interface 112. This may then be communicated to the user and/or proprietor to monitor usage of the charger adapter 500.

**Fig. 6** describes an example method for charging an EV, for example for use with any of the EV charger adapters of Figs. 1A to 5B. Fig. 6 is described below in relation to the EV charger adapter 500 shown in Figs. 5A and 5B.

In use, the incoming power line 506A of the EV charger adapter 500 is electrically coupled to an EV charger, for example via an incoming connection point 102 as shown in Figs. 1A, 1B, 2A, and 4. An indication that an EV charger is electrically coupled to the incoming power line 506A may be received 1020 by the processor 110, for example via the signal line 508. The default position of the switch 106 is in the open configuration.

A user may then connect the outgoing power line 506C to an EV for charging, for example via an outgoing power cable 104 as shown in Figs. 1A, 1B, 2A, and 4. Optionally, an indication that an EV is electrically coupled to the outgoing power line 506C may be received 1020 by the processor 110, for example via the signal line 508.

A request to charge the EV is received 1010 from a user remote device D01 by the processor 110. For examples, the request may be sent in the event that a booking is made to use the charger, for example through an online booking platform, analogous to AIRBNB^{™} for EV chargers.

Based on the request 1010 and the indication that an EV charger is electrically coupled to the incoming power line 506A, a signal 1030 is sent by the processor 110 to the switch 106 to transition into the closed configuration. This may involve applying a small voltage to the switch 106. Optionally, sending the signal 1030 to close the switch may additionally be based on the indication that an EV is electrically coupled to the outgoing power line 506C.

Electricity then flows from incoming power line 506A to the outgoing power line 506C via the closed switch 106. Thus, the EV coupled to the outgoing power line may be charged.

Subsequently, the processor 110 signals to transition the switch 106 into the open configuration. This may be in response to a signal received via the wireless communication interface 112 from a remote device or based on an indication of the charging of the EV, for example duration of charge (as described in relation to Fig. 1A), time of charge, etc.

Alternatively, or in addition, the switch 106 is configured to be transitioned from the closed configuration into the open configuration based on an indication that the amount of charge measured by the charge meter 502 is equal to or greater than a threshold. In some examples, the threshold may be determined based on a pre-determined charging amount requested by a user as part of the request to charge 1010. The pre-determined charging amount may correspond to an amount of charge paid for by the user.

Electricity flow from the incoming power line 506A to the outgoing power line 506C is then inhibited and charging of the EV is ceased.

In this example, the power line 506A, 506B, 506C is coupled to the switch 106, whereas the signal line 508 is not coupled to the switch 106. However, the skilled person will understand that in other examples, the signal line 508 may be coupled to the switch 106, additionally or instead of the power line 506, such that in the open configuration the switch 106 is configured to inhibit the flow of electricity from at least one of (i) the power line 506 and (ii) the signal line 508.

In the context of the present disclosure other examples and variations of the apparatus and methods described herein will be apparent to a person of skill in the art.

The present invention may be described in accordance with the following clauses.
Clause 1. An electric vehicle, EV, charger adapter comprising:
   an incoming power connection point, configured to be electrically coupled to an EV charger;
   an outgoing power connection point, configured to be electrically coupled to an EV;
   a switch, coupled between the incoming power connection point and the outgoing power connection point, the switch being configured for (i) a closed configuration configured to permit the flow of charge from the incoming power connection point to the outgoing power connection point, and (ii) an open configuration configured to inhibit the flow of charge from the incoming power connection point to the outgoing power connection point; and
   a processor, coupled to the switch, comprising a communication interface, wherein the communication interface is configured to communicate with a remote device; and
   wherein the processor is configured to transition the switch between (i) the open configuration and (ii) the closed configuration based on signals received by the wireless communication interface.
Clause 2. The EV charger adapter of any preceding claim further comprising a securing means, configured to reversibly secure the incoming power connection point to at least a portion of an EV charger, for example wherein the securing means comprises a clamp.
Clause 3. The EV charger adapter of any preceding claim wherein the incoming power connection point comprises an incoming socket, wherein the incoming socket is configured to receive an incoming EV charging plug of an EV charger, and optionally wherein the outgoing power connection point comprises an outgoing EV charging cable wherein the outgoing EV charging cable comprises a plug configured to charge an EV.
Clause 4. The EV charger adapter of clause 3, dependent on clause 2, wherein the securing means is configured to reversibly secure the incoming EV charging plug to the incoming socket.
Clause 5. The EV charger adapter of clause 4 further comprising a housing, wherein the housing comprises the incoming socket; and wherein the securing means comprises a lid portion, wherein the lid portion is configured to be reversibly secured to the housing, optionally wherein the lid portion comprises an aperture configured to receive an incoming EV charging cable, coupled to the incoming EV charging plug.
Clause 6. The EV charger adapter of any preceding clause wherein the incoming power connection point is configured to receive at least two power lines and at least one signal line from an EV charger, and wherein in the open configuration the switch is configured to inhibit the flow of charge from at least one of (i) at least one power line, or (ii) the at least one signal line.
Clause 7. The EV charger adapter of any preceding clause further comprising at least one of (i) a charge meter, configured to measure the flow of charge from the incoming power connection point to the outgoing power connection point; and (ii) a clock module, configured to measure the amount of time that the switch is in the closed configuration.
Clause 8. The EV charger adapter of any preceding clause further comprising a verification means, configured to verify the identity of a user.
Clause 9. The EV charger of any preceding claim wherein the communication interface comprises a wireless communication interface, configured to wirelessly communicate with a remote device, optionally wherein the remote device comprises a remote server.
Clause 10. A method for charging an electric vehicle, EV, the method comprising:
   receiving, by a wireless communication interface coupled to a processor, a request to charge an EV;
   receiving an indication that an EV charger is electrically coupled to an incoming power connection point and
   signalling, by the processor, to transition a switch coupled between the incoming power connection point and an outgoing connection point from an open configuration to a closed configuration, based on the request received by the wireless communication interface and the indication that an EV charger is electrically coupled to the incoming power connection point.
Clause 11. The method of clause 10 further comprising:
   receiving, by the processor, an indication that an EV is electrically coupled to an outgoing power connection point; and wherein the signal by the processorto transition the switch into the closed configuration is based at least in part on the indication that an EV is electrically coupled to the outgoing power connection point.
Clause 12. The method of any clauses 10 to 11, wherein the request to charge an EV comprises a requested charging duration, the method further comprising:
   measuring, using a clock module, the duration that the switch is in the closed position; and
   signalling, by the processor, to transition the switch from the closed configuration into the open configuration based on an indication that the duration measured by the clock module is equal to or greater than the requested charging duration.
Clause 13. The method of any clauses 10 to 12, wherein the request to charge an EV comprises a requested charging amount, the method further comprising:
   measuring, using a charge meter, the amount of charge flow from the incoming power connection point to the outgoing power connection point; and
   signalling, by the processor, to transition the switch from the closed configuration into the open configuration based on an indication that the amount of charge measured by the charge meter is equal to or greater than the requested charging amount.
Clause 14. The method of any clauses 10 to 13, the method comprising:
   sending, by the wireless communication interface, a verification request in response to receiving the request to charge an EV; and
   receiving a verification signal;
   wherein the signal by the processor to transition the switch into the closed configuration is based at least in part on the verification signal.
Clause 15. A computer program product comprising program instructions configured to program a programmable device to perform the method of any of clauses 10 to 14.

## Claims

1. An electric vehicle, EV, charger adapter comprising:
an incoming power connection point, configured to be electrically coupled to an EV charger;
an outgoing power connection point, configured to be electrically coupled to an EV;
a securing means, configured to reversibly secure the incoming power connection point to at least a portion of an EV charger;
a switch, coupled between the incoming power connection point and the outgoing power connection point, the switch being configured for (i) a closed configuration configured to permit the flow of charge from the incoming power connection point to the outgoing power connection point, and (ii) an open configuration configured to inhibit the flow of charge from the incoming power connection point to the outgoing power connection point; and
a processor, coupled to the switch, comprising a communication interface, wherein the communication interface is configured to receive, from a remote device, a request to charge an EV, wherein the request comprises a requested charging amount, and wherein the processor is configured to transition the switch between (i) the open configuration and (ii) the closed configuration based on signals received by the communication interface;
a verification means, configured to verify the identity of a user, wherein the switch is configured to be transitioned from the open configuration into the closed configuration based at least in part on a verification signal from the verification means; and
a charge meter configured to measure the flow of charge from the incoming power connection point to the outgoing power connection point, wherein the switch is configured to be transitioned from the closed configuration into the open configuration based on an indication measured by the charge meter that the amount of charge measured by the charge meter is equal to or greater than the requested charging amount.

2. The EV charger adapter of any preceding claim wherein the incoming power connection point comprises an incoming socket, wherein the incoming socket is configured to receive an incoming EV charging plug of an EV charger.

3. The EV charger adapter of claim 2 wherein the securing means is configured to reversibly secure the incoming EV charging plug to the incoming socket.

4. The EV charger adapter of claim 3 further comprising a housing, wherein the housing comprises the incoming socket; and wherein the securing means comprises a lid portion, wherein the lid portion is configured to be reversibly secured to the housing.

5. The EV charger adapter of claim 4 wherein the lid portion comprises an aperture configured to receive an incoming EV charging cable, coupled to the incoming EV charging plug.

6. The EV charger adapter of any preceding claim wherein the securing means comprises a clamp, configured to reversibly secure the incoming power connection point to at least a portion of an EV charger.

7. The EV charger adapter of any preceding claim wherein the incoming power connection point is configured to receive at least two power lines and at least one signal line from an EV charger, and wherein in the open configuration the switch is configured to inhibit the flow of charge from at least one of (i) at least one power line, or (ii) the at least one signal line.

8. The EV charger adapter of any preceding claim wherein the switch is configured to be transitioned between the open configuration and the closed configuration based on the application of a voltage, optionally wherein the switch comprises a physical relay switch.

9. The EV charger adapter of any preceding claim wherein the outgoing power connection point comprises an outgoing EV charging cable, optionally wherein the outgoing EV charging cable comprises a plug configured to charge an EV.

10. The EV charger adapter of any preceding claim wherein the remote device comprises a remote server.

11. The EV charger of any preceding claim wherein the communication interface comprises a wireless communication interface, configured to wirelessly communicate with a remote device.

12. A method for charging an electric vehicle, EV, using the EV charger adapter of any preceding claim, the method comprising:
receiving, by the communication interface coupled to the processor, a request to charge an EV, wherein the request comprises a requested charging amount;
receiving an indication that an EV charger is electrically coupled to the incoming power connection point;
receiving an indication that the identity of a user has been verified; and
signalling, by the processor, to transition the switch coupled between the incoming power connection point and the outgoing connection point from an open configuration to a closed configuration, based on the request received by the communication interface, the indication that an EV charger is electrically coupled to the incoming power connection point, and the indication that the identity of a user has been verified;
measuring, using the charge meter, the amount of charge flow from the incoming power connection point to the outgoing power connection point; and
signalling, by the processor, to transition the switch from the closed configuration into the open configuration based on an indication that the amount of charge measured by the charge meter is equal to or greater than the requested charging amount.

13. The method of any of claim 12 further comprising:
receiving, by the processor, an indication that an EV is electrically coupled to an outgoing power connection point; and
wherein the signal by the processor to transition the switch into the closed configuration is based at least in part on the indication that an EV is electrically coupled to the outgoing power connection point.

14. The method of any claims 12 to 13, the method comprising:
sending, by the communication interface, a verification request in response to receiving the request to charge an EV; and
in response, receiving the indication that the identity of the user has been verified.

15. A computer program product comprising program instructions configured to program a programmable device to perform the method of any of claims 12 to 14.
